# EUROPEAN PATENT APPLICATION

(11) **EP 1 435 411 A1**
(43) Date of publication of application: **07.07.2004**
(21) Application number: 02029095.3
(22) Date of filing: 30.12.2002
(51) Int. Cl.: E01C 11/24, E01C 5/16, B60N 3/04, E04F 15/06

(54) **Cold-stamped anti-slip pattern structure of a metal sheet**

(71) Applicant: Li, Ching-Po, Tao Yuan City, Tao Yuan Hsien (CN)
(72) Inventor: Li, Ching-Po, Tao Yuan City, Tao Yuan Hsien (CN)
(74) Representative: Casalonga, Axel

(57) **Abstract**

The present invention relates to a cold-stamped anti-slip pattern structure of a metal sheet which includes a metal plate and a plurality of raised anti-slip patterns. The metal plate in elongated or square shape has thickness of 2∼6 mm, and is preferably made of stainless steel or equivalent material. The raised anti-slip patterns are formed in punching process, arranged in vertically staggered way and protrude on the surface of the metal plate. Every raised anti-slip pattern is inclined at the angle of 45° relative to the metal plate when it is convexly stamped on the surface of the metal plate. The both sides thereof are symmetrically arched and converge toward both ends thereof, thereby creating a leaf shape. The raised top in leaf shape has a flat surface while the rim thereof is constructed as a slope. Based upon the above-mentioned configuration, the anti-slip effect can be enhanced, it's easy to produce and the structural strength can be increased.

## Description

### BACKGROUND OF THE INVENTION

### 1. Field of the Invention

The present invention relates to a cold-stamped anti-slip pattern structure of a metal sheet, and more particularly, to a pattern structure which has anti-slip effect, is easy to produce and can strengthen the main body of the metal sheet.

### 2. Description of the Prior Art

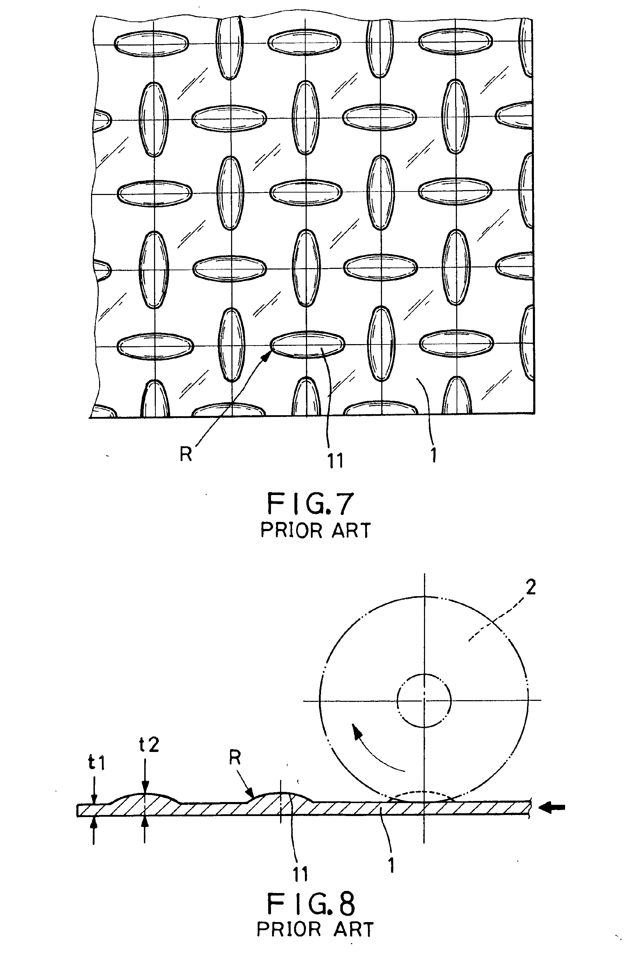

In order to avoid careless slip at many places, such as roads, plants, mechanic equipment, houses, coaches, decks, etc., pavements or corridors thereof are covered with metal plate with embossed patterns for anti-slip purpose. Unlike the casting metal covers on the roads, the metal plate amounts to only approx. 1∼6 mm. Besides, the conventional patterns on metal plates are formed in hot-rolling process. The hot-rolled patterns of metal plate still have drawbacks in production and in use as follows:
1. Hot-rolling formation must be carried out at high temperature before the metal plate is cooled. Therefore, it can only be done in the rolling mill. Besides, the rolling machine is very expensive and the rolling process is complicated so that it is impractical for use in the industry.
2. The metal plate 1 with hot-rolled anti-slip patterns 11, as shown in FIGS. 7 and 8, is formed by using a pattern roller 2 which rolls through the conveyed metal plate 1 which is not cooled yet. Under the restriction of the rotational arched tangent line of the circular pattern roller 2, the convex anti-slip patterns 11 are formed in arched shape, thereby lowering the anti-slip effect.
3. The hot-rolled anti-slip patterns 11 have a greater convex thickness (t2) than the thickness (t1) of the main body of the metal plate 1. However, the bottom and the metal plate 1 are combined in a solid body so that it is not beneficial to improve the mechanic strength of the cooled metal plate 1. On the contrary, it increases the weight and the production cost.

### SUMMARY OF THE INVENTION

It is a primary object of the present invention to provide a cold-stamped anti-slip pattern structure of a metal sheet which can improve the anti-slip effect thereof.

It is another object of the present invention to provide a cold-stamped anti-slip pattern structure of a metal sheet which can improve the structural strength of the main body of the metal plate.

It is a further object of the present invention to provide a cold-stamped anti-slip pattern structure of a metal sheet which is practical for further processing.

### BRIEF DESCRIPTION OF THE DRAWINGS

The accomplishment of this and other objects of the invention will become apparent from the following description and its accompanying drawings of which:
FIG. 1 is a schematic view of the present invention;
FIG. 2 is an enlarged view of the present invention;
FIG. 3 is a sectional view taken along the line A-A of FIG. 2;
FIG. 4 is a sectional view taken along the line B-B of FIG. 2;
FIG. 5 is a comparison list of the strength test;
FIG. 6 is a diagram showing the result of the strength test;
FIG. 7 is a schematic drawing of the hot-rolled anti-slip pattern of a metal plate of the prior art; and
FIG. 8 is a sectional view of the hot-rolled anti-slip pattern of a metal plate of the prior art.

### DETAILED DESCRIPTION OF THE PREFERRED EMBODIMENT

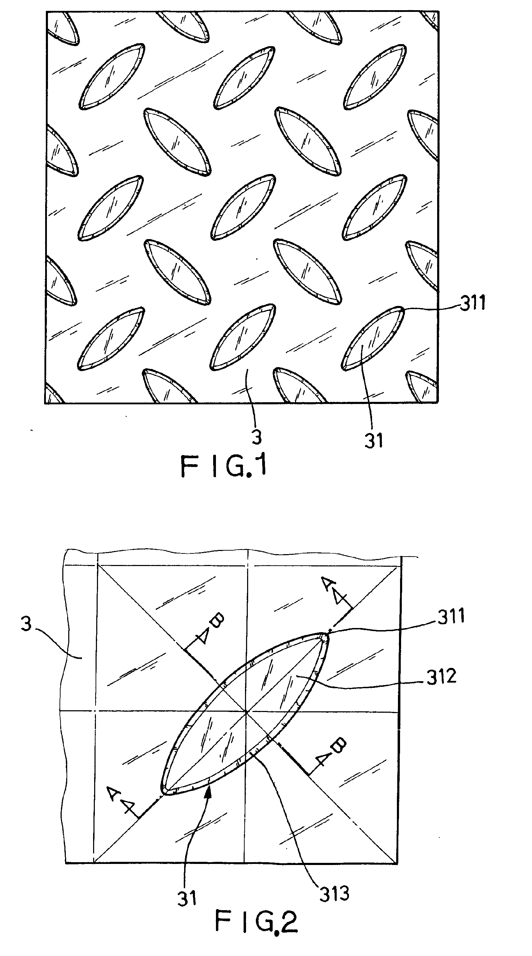

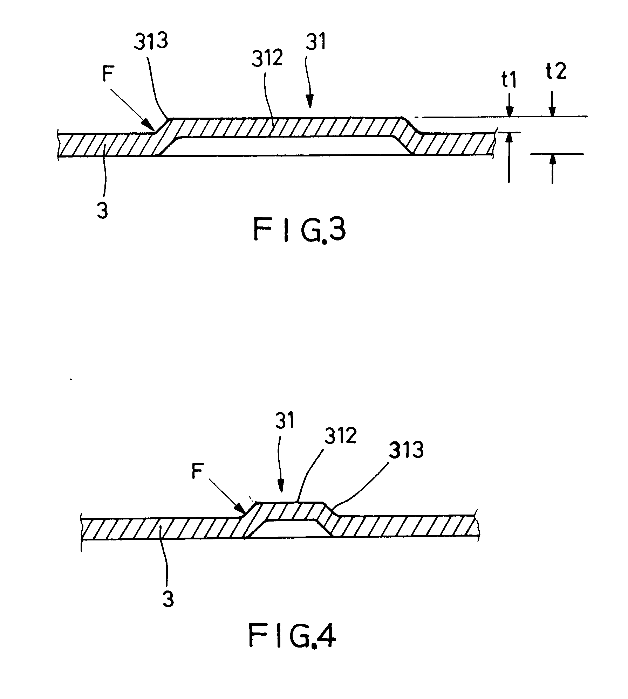

First of all, referring to FIGS. 1 through 4, an improvement of cold-stamped anti-slip pattern structure of a metal sheet in accordance with the present invention is shown. The present invention mainly includes a metal plate 3 and a plurality of raised anti-slip patterns 31. The metal plate 3 in elongated or square shape has thickness of 2∼6 mm, and is preferably made of stainless steel or equivalent material. The raised anti-slip patterns 31 are formed in punching process, arranged in vertically staggered way and protrude on the surface of the metal plate 3.

Every raised anti-slip pattern 31 is inclined at the angle of 45° relative to the metal plate 3 when it is convexly stamped on the surface of the metal plate 3. The both sides thereof are symmetrically arched and converge toward both ends 311 thereof, thereby creating a leaf shape. The raised top in leaf shape has a flat surface 312 while the rim thereof is constructed as a slope 313.

Based on the above-mentioned, the top of the raised anti-slip patterns 31 of the present invention is constructed as flat surface 312 and inclined at the rim thereof. In addition, they converge toward both ends 311 thereof and are vertically staggered. After being raised on the surface of the metal plate 3, the raised anti-slip patterns 31 have a greater frictional force (F) both at the front side and at the side thereof than the conventional convex anti-slip patterns 31. Furthermore, the slope 313 at the rim thereof and the convergent points at both ends 311 enable a full-range of anti-slip supporting face, thereby enhancing the anti-slip effect.

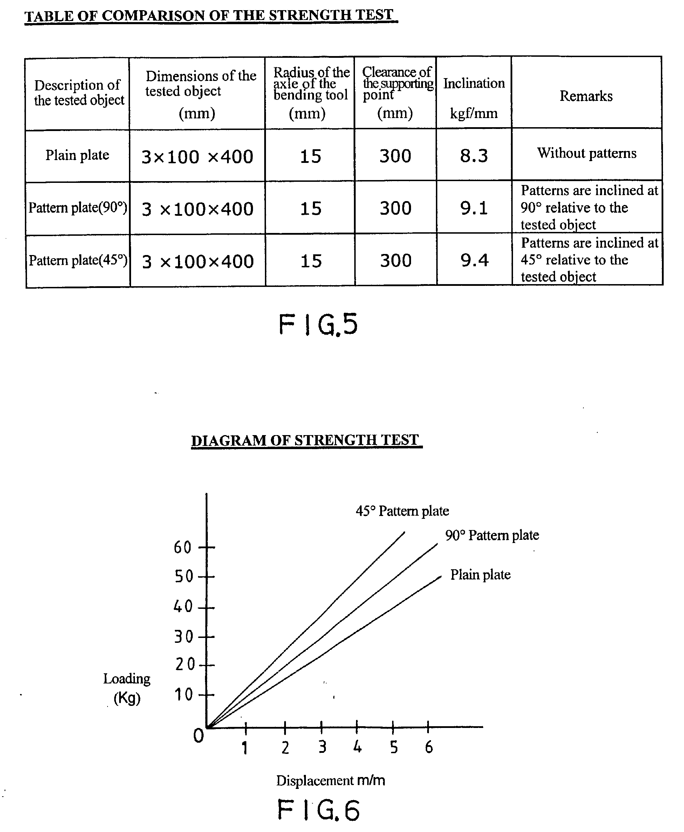

In addition, the raised anti-slip patterns 31 after stamping formation have thickness (t1) of approx. 1.5 mm, plus the original thickness of the metal plate 3, thereby creating thickness of t2. The neighbored raised anti-slip patterns 31 are vertical to each other and inclined at an angle of 45° relative to each side of the metal plate 3. Based on the aforementioned configuration, the mechanic strength of the metal plate 3 of the present invention is enhanced. In den FIGS. 5 and 6, the comparison of the strength test of the present invention is shown. In the strength test, the comparison among a plain metal plate, a metal plate with 90° embossed patterns and a metal plate with 45° embossed patterns under the condition of the same thickness is performed. The comparison result shows that the plain metal plate without embossed patterns has the inclination of 8.3 kg f/mm and lower load strength, the metal plate with 90° embossed patterns has the inclination of 9.1 kg f/mm and average load strength and the metal plate with 45° embossed patterns has the inclination of 9.4 kg f/mm and the best load strength.

The present invention is made in such a way that the metal sheet is cut out in accordance with preset size, thereby forming a metal plate with desired size. Thereafter, the metal plate is stamped by a punching machine to form desire patterns. The production process is not only easier than the hot-rolling process, but also the rolling mills are not required. Accordingly, the present invention is applicable to the industry.

Many changes and modifications in the above-described embodiment of the invention can, of course, be carried out without departing from the scope thereof. Accordingly, to promote the progress in science and the useful arts, the invention is disclosed and is intended to be limited only by the scope of the appended claims.

## Claims

1. A cold-stamped anti-slip pattern structure of a metal sheet comprising:
a metal plate in elongated or square shape having thickness of 2∼6 mm;
a plurality of raised anti-slip patterns formed in punching process, arranged in vertically staggered way and protruding on the surface of the said plate;
wherein the improvement is **characterized in**:
each of said raised anti-slip patterns being inclined at the angle of 45° relative to said metal plate when it is convexly stamped on the surface of said metal plate;
both sides of said raised anti-slip patterns being symmetrically arched and converging toward both ends thereof, thereby creating a leaf shape; and
said raised top of said raised anti-slip patterns in leaf shape having a flat surface while the rim thereof is constructed as a slope.

2. The cold-stamped anti-slip pattern structure of a metal sheet as claimed in claim 1 wherein said raised anti-slip patterns after stamping formation have thickness of approx. 1.5 mm.
